# EUROPEAN PATENT SPECIFICATION

(11) **EP 3 760 399 B1**
(45) Date of publication and mention of the grant of the patent: **19.07.2023**
(21) Application number: 19785763.4
(22) Date of filing: 10.04.2019
(51) Int. Cl.: B27C 5/06, B25J 9/06, B27C 9/02

(54) **MULTIPLE SPINDLE ROBOT FIXATION DEVICE, PROCESSING SYSTEM**
VORRICHTUNG ZUR BEFESTIGUNG EINES MEHRSPINDEL-ROBOTERS, VERARBEITUNGSSYSTEM
DISPOSITIF DE FIXATION DE ROBOT À BROCHES MULTIPLES, SYSTÈME DE TRAITEMENT

(30) Priority: 11.04.2018 JP 2018076404
(43) Date of publication of application: 06.01.2021
(73) Proprietor: National University Corporation Chiba University, Chiba-shi, Chiba 263-8522 (JP); Maeda Corporation, Chiyoda-ku, Tokyo 1028151 (JP)
(72) Inventor: HIRASAWA, Gakuhito, Chiba-shi, Chiba 263-8522 (JP); TSUNAKAWA, Takashi, Tokyo 102-8151 (JP); YAMATO, Daisaku, Tokyo 102-8151 (JP)
(74) Representative: Ter Meer Steinmeister & Partner
(86) International application number: PCT/JP2019/015545
(87) International publication number: WO 2019/198736

(56) References cited:
- EP-A1- 2 363 260
- DE-A1-102015 218 814
- JP-A- H04 372 320
- JP-A- 2015 102 918
- JP-A- 2017 168 065
- JP-B1- 5 982 075
- US-A- 4 669 184

## Description

### TECHNICAL FIELD

The present disclosure relates to a fixing device for a multi-axis robot for fixing a processing object during processing by the multi-axis robot, according to the preamble of claim 1 and a processing system including the same. Such a fixing device is known from the document JPH04372320 A.

### BACKGROUND

A pre-cut method is widely used in which wood is processed by a machine tool installed in a factory or the like before on-site construction. As described in Patent Document 1, a wood processing system for performing the conventional pre-cut method includes a plurality of processing machines dedicated to respective processes including a cutting machine, an intermediate processing machine, a joint processing machine, and the like arranged in order of processes from an upstream side of a wood processing line, and a plurality of line conveyors arranged on an upstream side and a downstream side of the processing machines and connecting the processing machines in series in order to carry wood into and out of the processing machines. The wood processing system processes wood into a desired shape by sequentially performing necessary processing from a processing machine located upstream of the wood processing line.

In the wood processing system described in Patent Document 1, since the number of types of processing that can be performed by each processing machine is small and the degree of freedom of each processing machine is low, it may be difficult to process wood into a complicated shape or to cope with multi-product small-quantity production. In addition, since the wood processing system described in Patent Document 1 needs to include the plurality of processing machines and the plurality of line conveyors, there may be increase in size, complexity, and cost of the system.

Recently, in view of the above-described problems, a wood processing system have been devised, which includes a multi-articulated robot capable of replacing a processing tool attached to the tip of an arm and a plurality of saddles which are movable along a guide rail passing through a processing region of the multi-articulated robot, as described in Patent Document 2. Each of the plurality of saddles described in Patent Document 2 includes a tilt table, which uses the upper surface thereof as a mounting table for the processing object and is supported by a base body such that the above-described mounting surface can be tilted by a predetermined angle, and a vise capable of approaching or separating along the above-described mounting surface.

### Citation List/ Patent Literature

Patent Document 1: JP2015-102918A; Patent Document 2: JP5982075B
EP 2 363 260 A1 describes an apparatus for machining workpieces made of wood or of a material that is similar to wood, a workpiece locking device which comprises a row of grippers arranged alongside one another, and each hinged on a support about a rotation pivot with an axis that is parallel to the row of grippers. The grippers can be excluded from the locking action and can be subsequently rearmed in function of the machining to be performed.
US 4 669 184 A describes a building truss fabrication apparatus in which a plurality of press head assemblies is supported by an overhead gantry support so that the various press assemblies are movable in an x-y coordinate space. A movable jig table is arranged to move between an assembly position and a pressing position within the apparatus. The movement of the jig table is hydraulically powered as are the press head assemblies. The entire apparatus is operable by a single hydraulic power source.
DE 10 2015 218814 A1 describes a processing device, in particular for processing workpieces made of wood, wood-based materials, plastic or the like, with at least one workpiece table with a first workpiece holder for holding at least one workpiece, furthermore with a second workpiece holder for holding at least one workpiece, characterized in that the workpiece is reclamped from the first workpiece holder into the second workpiece holder can be positioned in at least two dimensions, advantageously in three dimensions.
JP H04 372320 A discloses a fixed block with a reference rod supported slidably to the fixed block, and a hydraulic collet for fixing the reference rod. A moving block separably approaching the fixed block is provided with a clamp rod supported slidably to the moving block, and a hydraulic collet for fixing the clamp rod. A workpiece is clamped through both rods.

### SUMMARY

### Technical Problem

However, each of the plurality of saddles described in Patent Document 2 is movable along the guide rail, and includes the above-described tilt table and the above-described vise, resulting in a complicated structure. Moreover, the wood processing system including the above-described guide rail and the above-described plurality of saddles has a large exclusive space in the entire system. Such a wood processing system may increase an introduction cost. In addition, the shape of the processing object attached to the tilt table by the vise may be restricted. For example, it is difficult to attach, to the tilt table, a flat plate or a curved member having a predetermined width dimension or more.

In view of the above, an object of at least one embodiment of the present invention is to provide a fixing device which has a simple structure, can have a decreased exclusive space, and can fix processing objects of various shapes.

### Solution to Problem

A fixing device for a multi-axis robot according to at least one embodiment of the present invention is a fixing device for a multi-axis robot for fixing wood as a processing object during processing by the multi-axis robot, the device including a plurality of fixing units, each of the plurality of fixing units including a support member including a first frame having a longitudinal direction along a vertical direction, a second frame having a longitudinal direction along the vertical direction and positioned away from the first frame in a horizontal direction, and an installation member positioned between the first frame and the second frame in a top view and configured to be able to mount the processing object, and at least one pressing device attached to the second frame, the at least one pressing device being capable of pressing the processing object inserted between the first frame and the second frame against the first frame.

With the above configuration (1), each of the fixing units can fix the processing object by pressing the processing object against the first frame by the pressing device attached to the second frame, after inserting the processing object between the first frame and the second frame to be placed on the installation member. Moreover, since the first frame and the second frame each have the longitudinal direction along the vertical direction, the fixing device can insert and fix, between the first frame and the second frame, the processing objects of various shapes, for example, a plate-like member such as the flat plate, a long member such as a column or a beam, and a curved member. Further, the fixing device including the plurality of fixing units described above has a simple structure. Furthermore, the above-described fixing device can fix the plate-like member such as the flat plate and the curved member in a vertical position, for example. Thus, it is possible to prevent a gap between the first frame and the second frame from increasing, and to decrease an exclusive space for the fixing device.

According to the invention, in the fixing device for the multi-axis robot according to the above configuration, the at least one pressing device is composed of a plurality of pressing devices, and the plurality of pressing devices are arranged at intervals in the longitudinal direction of the second frame

Since the plurality of pressing devices are arranged at intervals in the longitudinal direction of the second frame, the fixing units including the plurality of pressing devices can press the processing object against the first frame by the pressing devices at a plurality of positions in the longitudinal direction of the second frame, respectively. Thus, the processing objects can be fixed by the plurality of pressing devices, even if the processing objects have the various shapes.

According to the invention, in the fixing device for the multi-axis robot according to the above configuration the at least one pressing device includes a cylinder that allows forward movement of a cylinder rod by a pneumatic pressure or a hydraulic pressure.

Since the at least one pressing device includes the cylinder that allows the forward movement of the cylinder rod by the pneumatic pressure or the hydraulic pressure, it is possible to simplify the structure of the fixing device and to fix the processing object by pressing the processing object against the first frame by the cylinder rod of the cylinder.

In the fixing device for the multi-axis robot according to the invention, the at least one pressing device includes a cylinder that allows forward movement of a cylinder rod by a pneumatic pressure or a hydraulic pressure, and the fixing device further includes a long member having a longitudinal direction along the vertical direction, the long member being fixed to respective tips of a plurality of cylinder rods.

Since the at least one pressing device includes the cylinder that allows the forward movement of the cylinder rod by the pneumatic pressure or the hydraulic pressure, it is possible to simplify the structure of the fixing device and to fix the processing object by pressing the processing object against the first frame by the cylinder rod of the cylinder. At this time, since the fixing device includes the long member fixed to the respective tips of the plurality of cylinder rods, it is possible to fix the processing object by pressing the processing object against the first frame, with the long member biased by the plurality of cylinders. Moreover, since the long member has the longitudinal direction along the vertical direction, it is possible to fix the processing objects of the various shapes by the long member.

In a further embodiment, in the fixing device for the multi-axis robot according to above configuration the plurality of fixing units further include a rotary table attached to at least one of the first frame or the second frame, the rotary table being configured to be able to mount the processing object and to be rotatable about an axial line extending along the horizontal direction orthogonal to a direction in which the first frame and the second frame are separated from each other.

With the above configuration , it is possible to mount the processing object on the rotary table, and to change the vertical height position of the mounted processing object. The rotary table can dispose each of the processing objects of the various shapes at a height position suitable for processing.

In a further embodiment in the fixing device for the multi-axis robot according to any one of the above configurations , the fixing device for the multi-axis robot further includes a support table extending along the horizontal direction orthogonal to a direction in which the first frame and the second frame are separated from each other, the support table being capable of fixing the plurality of fixing units.

With the above configuration since the plurality of fixing units are fixed by the support table, it is possible to prevent turnover of the plurality of fixing units.

In a further embodiment, in the fixing device for the multi-axis robot according to the above configuration the support table includes a first support table for supporting the first frame and a second support table for supporting the second frame, and the installation member includes a connection frame connected to the first support table and the second support table.

With the above configuration, since the installation member includes the connection frame connected to the first support table and the second support table, the installation member is firmly supported by the first support table supporting the first frame and the second support table supporting the second frame. Thus, it is possible to prevent the processing object inserted between the first frame and the second frame from falling off.

A processing system by a multi-axis robot according to at least one embodiment of the present invention includes the fixing device for the multi-axis robot according to any one of the above configurations, and at least one multi-axis robot arranged at a position away from the fixing device for the multi-axis robot, in a direction in which the first frame and the second frame are separated from each other.

With the above configuration, it is possible to fix the processing objects of the various shapes by the above-described fixing device, and to process, by the multi-axis robot, the processing objects fixed by the fixing device.

### Advantageous Effects

According to at least one embodiment of the present invention, a fixing device is provided, which has a simple structure, can have a decreased exclusive space, and can fix processing objects of various shapes.

### BRIEF DESCRIPTION OF DRAWINGS

FIG. 1 is a schematic configuration view for describing a processing system by a multi-axis robot according to an embodiment.
FIG. 2 is a schematic side view for describing fixing units of a fixing device according to an embodiment
FIG. 3 is a view for describing the fixing units, as viewed from a direction of an arrow A shown in FIG. 2.
FIG. 4A is a view for describing a processing object constituted by a plate-like member.
FIG. 4B is a view for describing a processing object constituted by a long member.
FIG. 4C is a view for describing a processing object constituted by a curved member.
FIG. 5 is a schematic perspective view of a multi-axis robot (multi-articulated robot) according to an embodiment.
FIG. 6A is a view for describing a processing unit attached to the multi-axis robot (multi-articulated robot), the processing unit including a disk blade.
FIG. 6B is a view for describing a processing unit attached to the multi-axis robot (multi-articulated robot), the processing unit including a square chisel.
FIG. 6C is a view for describing a processing unit attached to the multi-axis robot (multi-articulated robot), the processing unit including a router.
FIG. 6D is a view for describing a processing unit attached to the multi-axis robot (multi-articulated robot), the processing unit including a vibration chisel.
FIG. 7 is a schematic side view of the fixing units, for describing the fixing device for the multi-axis robot according to another embodiment.
FIG. 8 is a schematic side view of the fixing units including a rotary table, for describing the fixing device for the multi-axis robot according to another embodiment.
FIG. 9 is a flowchart of a fixing method of the processing object.

### DETAILED DESCRIPTION

Some embodiments of the present invention will be described below with reference to the accompanying drawings. It is intended, however, that unless particularly identified, dimensions, materials, shapes, relative positions and the like of components described in the embodiments or shown in the drawings shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, the expressions "comprising", "including", "having", "containing", and "constituting" one constituent component are not exclusive expressions that exclude the presence of other constituent components.

The same features as those in the second embodiment are indicated by the same reference numerals and not described in detail

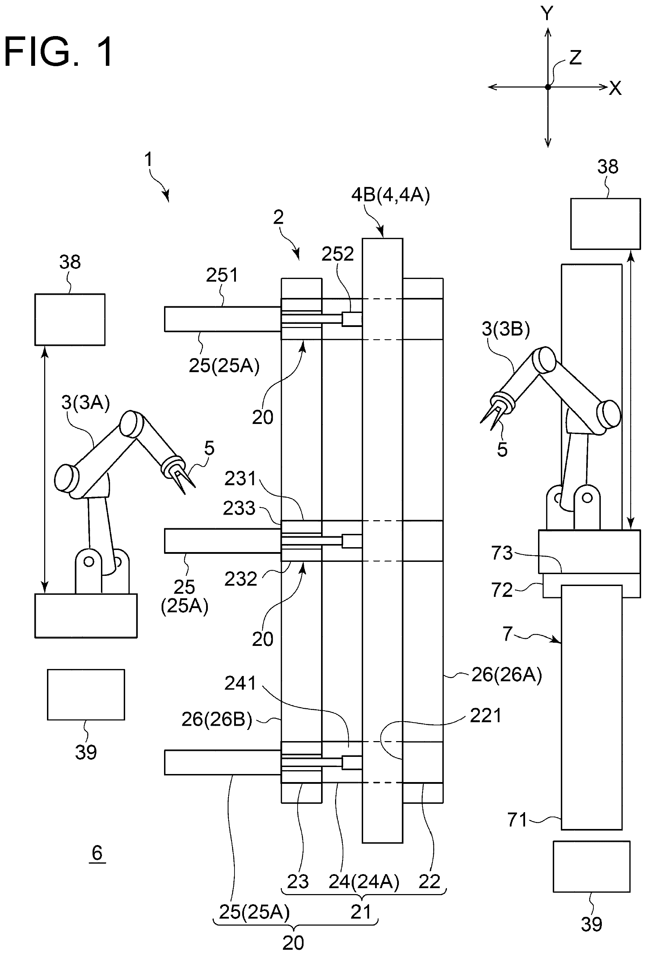

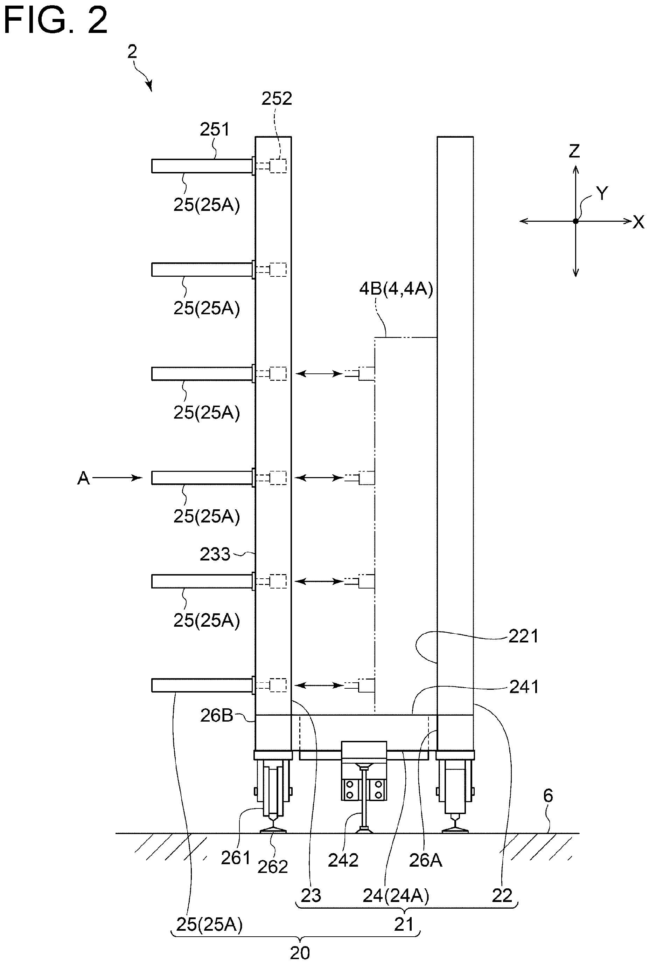

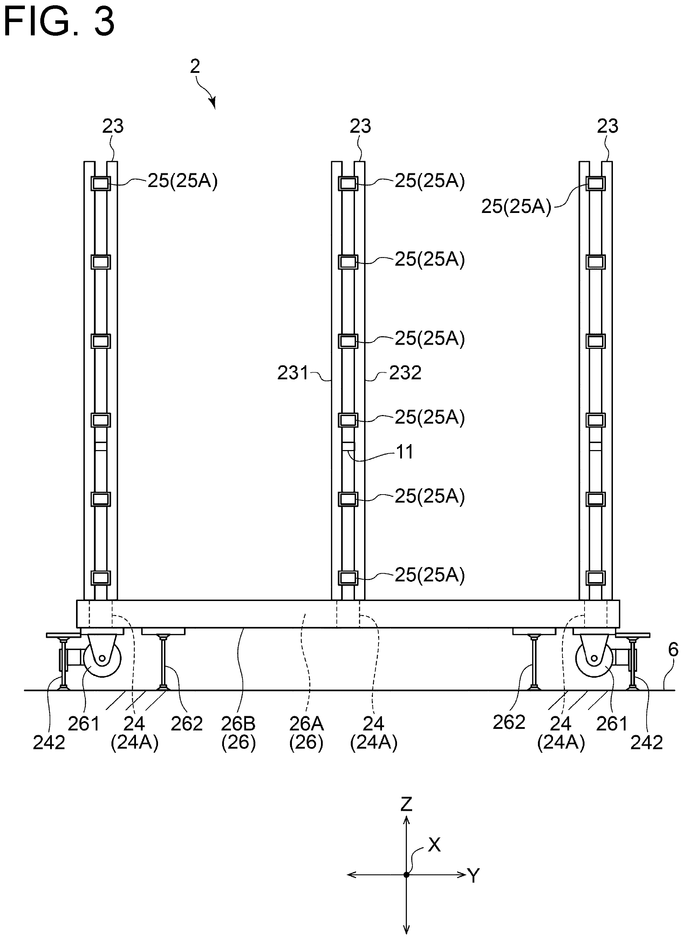

FIG. 1 is a schematic configuration view for describing a processing system by a multi-axis robot according to an embodiment. FIG. 2 is a schematic side view for describing fixing units of a fixing device according to an embodiment. FIG. 3 is a view for describing the fixing units, as viewed from a direction of an arrow A shown in FIG. 2. A state of the fixing device 2 in FIG. 1 as viewed from the top is shown, in which a processing object 4 (plate-like member 4B) is inserted to be fixed.

As shown in FIG. 1, a processing system 1 according to some embodiments includes the fixing device 2 and at least one multi-axis robot 3. The processing system 1 is a system for processing, such as cutting or machining, wood 4A as the processing object 4 by the multi-axis robot 3. Moreover, the fixing device 2 is a device for a multi-axis robot for fixing the processing object 4 during the processing by the multi-axis robot 3. In some embodiments, the multi-axis robot 3 is a robot having not less than five rotational axes (control axes). Preferably, the multi-axis robot 3 has not less than five control axes. More preferably, the multi-axis robot 3 has not less than six control axes.

As shown in FIGs. 1 to 3, the fixing device 2 includes a plurality of fixing units 20. As shown in FIGs. 1 to 3, the one fixing unit 20 includes a support member 21 including a first frame 22, a second frame 23, and an installation member 24, and at least one pressing device 25 attached to the second frame 23.

As shown in FIGs. 1 to 3, the first frame 22 is made of, for example, a metal material such as a steel material and has a longitudinal direction along the vertical direction. As shown in FIGs. 1 to 3, the second frame 23 is made of, for example, a metal material such as a steel material and has a longitudinal direction along the vertical direction. Then, as shown in FIG. 2, the second frame 23 is positioned away from the first frame 22 in the horizontal direction. Hereinafter, a direction in which the first frame 22 and the second frame 23 are separated from each other will be referred to as an X direction, and a horizontal direction orthogonal to the X direction will be referred to as a Y direction, and the vertical direction will be referred to as a Z direction.

As shown in FIG. 1, the installation member 24 is positioned between the first frame22 and the second frame 23 in a top view, and is configured to be able to mount the processing object 4. The installation member 24 includes a connection frame 24A extending along the X direction.

In the embodiments shown in FIGs. 1 to 3, the connection frame 24A is made of, for example, a metal material such as a steel material, and is positioned below the lower end of the first frame 22 and the lower end of the second frame 23. Then, the connection frame 24A extends between the first support table 26A and a second support table 26B, and is fixed to the first support table 26A and the second support table 26B by bolt fastening, welding, or the like. The first support table 26A extends along the Y direction and supports the lower end of the first frame 22 from the bottom. The second support table 26B extends along the Y direction and supports the lower end of the second frame 23 from the bottom. In other words, the connection frame 24A is connected to the first support table 26A and the second support table 26B. It is possible to mount the processing object 4 on an upper surface 241 of the connection frame 24A.

A support table 26 includes the above-described first support table 26A and the above-described second support table 26B. The support table 26 extends along the Y direction, and is configured to be able to fix the plurality of fixing units 20 by bolt fastening, welding, or the like. As shown in FIG. 3, casters 261 and supporting legs 262 capable of height adjustment are attached to the lower end of the support table 26. The support table 26 is supported from the bottom by the supporting legs 262 erecting on a floor surface 6. Moreover, as shown in FIG. 3, supporting legs 242 capable of height adjustment are attached to the lower end of the connection frame 24A as well. The connection frame 24A is supported from the bottom by the supporting legs 242 erecting on the floor surface 6. Thus, a gap is formed between the floor surface 6 and the processing object 4 mounted on the upper surface 241 of the connection frame 24A. Accordingly, the multi-axis robot 3 can process a lower portion of the processing object 4 except for a portion mounted on the connection frame 24A.

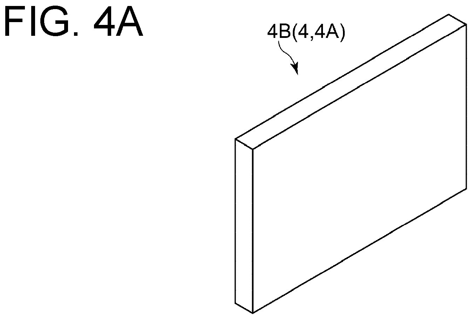

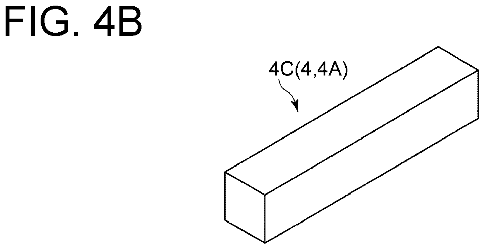

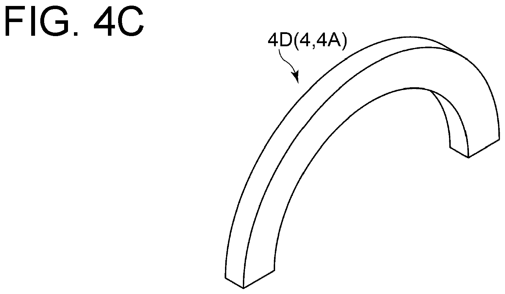

FIG. 4 are views for describing a processing object. FIG. 4A shows a plate-like member, FIG. 4B shows a long member, and FIG. 4C shows a curved member. As shown in FIGs. 4A to 4C, the processing object 4 (wood 4A) includes the plate-like member 4B such as a flat plate, a long member 4C having the longitudinal direction, such as square wood used for a column, a beam, and the like, and a curved member 4D. The shape of the processing object 4 (wood 4A) is not limited to those exemplified in FIG. 4. The processing object 4 (wood 4A) includes members of other shapes, such as a round member. Moreover, the processing object 4 (wood 4A) includes a woody material which is a material obtained by artificially reconstituting wood. More specifically, the processing object 4 (wood 4A) includes veneer, veneer laminated wood, laminated wood, solid wood, plywood, composite wood having a layered combination of the above, or jointly-bonded wood.

A product formed by processing the processing object 4 may be, for example, a column or a beam constituting a wooden house, or may be a fixture material such as a head jamb, furniture, a woodworking craft, or the like. Thus, processing for the processing object 4 includes cutting processing, formation of joints, holes, grooves, and the like, and processing for the purpose of decoration.

The processing object 4 is inserted between the first frame 22 and the second frame 23 from the above in the vertical direction or from a side along the Y direction, by a carrier device such as a crane (not shown), for example. Then, the processing object 4 is mounted on the upper surface 241 of the connection frame 24A.

The pressing device 25 is configured to be able to press the processing object 4 against the first frame 22. The processing object 4 inserted between the first frame 22 and the second frame 23 is pressed against the first frame 22 by the pressing device 25, thereby being interposed and fixed between the pressing device 25, and a surface 221 of the first frame 22 facing the second frame 23.

In the embodiments shown in FIGs. 1 and 3, the plurality of fixing units 20 are arranged at intervals, respectively, in the Y direction.

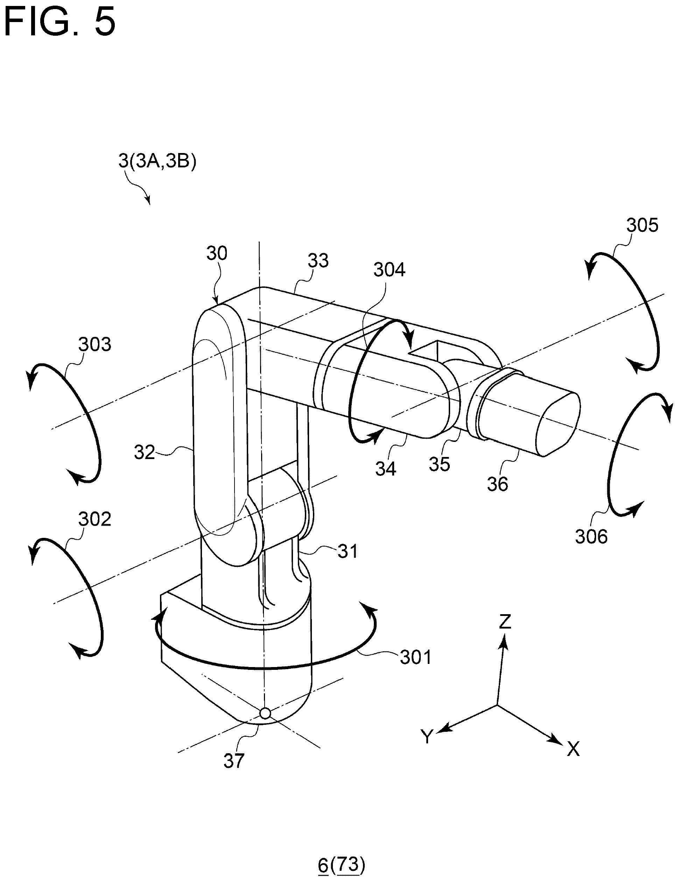

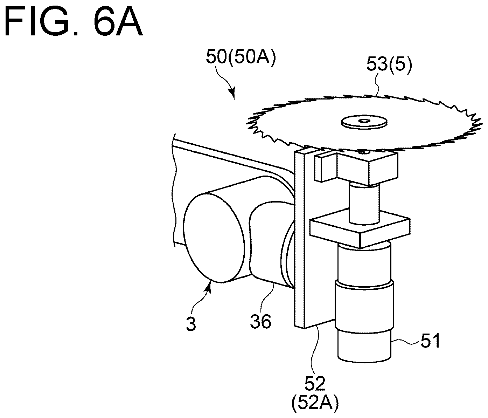

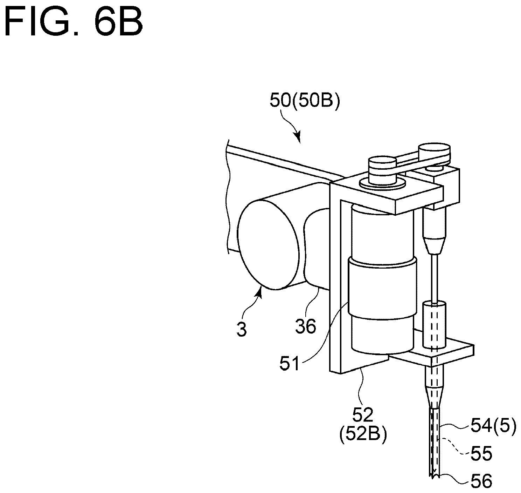

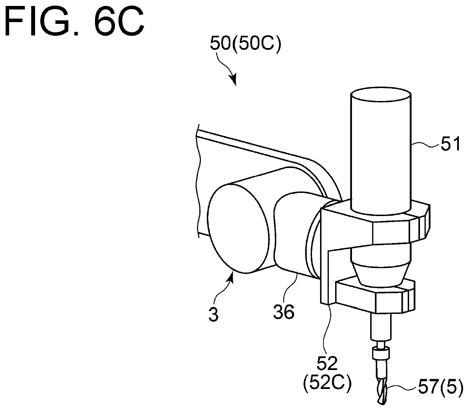

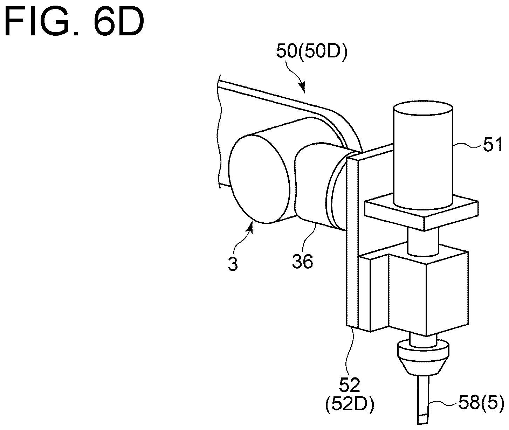

FIG. 5 is a schematic perspective view of the multi-axis robot (multi-articulated robot) according to an embodiment. FIG. 6 are views for describing a processing unit attached to the multi-axis robot (multi-articulated robot); FIG. 6A is a view showing a processing unit including a disk blade, FIG. 6B is a view showing a processing unit including a square chisel, FIG. 6C is a view showing a processing unit including a router, and FIG. 6D is a view showing a processing unit including a vibration chisel. The multi-axis robot 3 processes the processing object 4 fixed to the fixing device 2 by a processing tool 5 attached to the multi-axis robot 3.

The multi-axis robot 3 includes a multi-articulated robot. That is, in the embodiment shown in FIG. 5, the multi-axis robot 3 is the multi-articulated robot, which includes a wrist 36, an arm 30 for supporting and moving the wrist 36 and having not less than six rotational axes (rotational axes 301 to 306) and five articulated portions (articulated portions 31 to 35), and a robot base 37 supporting the arm 30 and placed on an installation surface (the floor surface 6, an upper surface 73 of a multi-axis robot conveying device 7 to be described later). The wrist 36 is configured to be able to detachably attach a processing unit 50 including the processing tool 5 as shown in FIGs. 6A to 6D.

The multi-axis robot 3 further includes a drive unit including not less than six servomotors (not shown). The drive unit drives the servomotors to relatively move the wrist 36 with respect to the processing object 4 along not less than the six rotational axes. As shown in FIGs. 6A to 6D, the processing unit 50 (processing units 50A to 50D) includes the processing tool 5, a drive unit 51 including a motor for driving the processing tool 5, and a holder 52 (holders 52A to 52D) supporting the processing tool 5 and the drive unit 51, and configured to be attachable to the wrist 36.

As shown in FIGs. 6A to 6D, the processing tool 5 includes a disk blade 53, a square chisel 54, a router 57, a vibration chisel 58, and the like. The disk blade 53 and the router 57 are rotationally driven by the drive unit 51 to process the processing object 4. Moreover, the square chisel 54 includes a drill 55 rotationally driven by the drive unit 51 and a square chisel blade 56 formed in a square tube shape covering the outer periphery of the drill 55 and having a sharp square portion at the tip. The square chisel 54 may include only the square chisel blade 56 without including the drill 55. Moreover, the vibration chisel 58 processes the processing object 4 by being vibrated by the drive unit 51. The processing tool 5 includes a processing tool other than the illustrated disk blade 53, for example, a processing tool used in wood processing such as a drill.

Such a multi-axis robot 3 can relatively move the processing unit 50 including the processing tool 5 attached to the wrist 36 with respect to the processing object 4 fixed to the fixing device 2, by rotating the wrist 36 along not less than the six rotational axes, and can bring the processing tool 5 into contact with any point of the processing object 4 at an any angle. In addition, by replacing the processing tool 5, the multi-axis robot 3 can perform various types of processing and can process the processing object 4 into a complicated shape. Therefore, it is possible to cope with multi-product small-quantity production.

As described above, the fixing device 2 according to some embodiments includes the plurality of fixing units 20, each of which includes the above-described support member 21 including the first frame 22, the second frame 23, and the installation member 24 (connection frame 24A), and the above-described at least one pressing device 25, as shown in FIGs. 1 to 3.

With the above configuration, each of the fixing units 20 can fix the processing object 4 by pressing the processing object 4 against the first frame 22 by the pressing device 25 attached to the second frame 23, after inserting the processing object 4 between the first frame 22 and the second frame 23 to be placed on the installation member 24. Moreover, since the first frame 22 and the second frame 23 each have the longitudinal direction along the vertical direction, the fixing device 2 can insert and fix, between the first frame 22 and the second frame 23, the processing objects 4 of various shapes, for example, the plate-like member 4B such as the flat plate, the long member 4C such as the column or the beam, and the curved member 4D. Further, the fixing device 2 including the plurality of fixing units 20 described above has the simple structure. Furthermore, the above-described fixing device 2 can fix the plate-like member 4B such as the flat plate and the curved member 4D in a vertical position, for example. Thus, it is possible to prevent a gap between the first frame 22 and the second frame 23 from increasing, and to decrease the exclusive space for the fixing device 2.

Moreover, since the fixing device 2 can fix the plate-like member 4B such as the flat plate and the curved member 4D in the vertical position, for example, it is possible to process the processing object 4 in a wide range by the multi-axis robot 3. If the processing object 4 is reversed or tilted during processing by the multi-axis robot 3, processing accuracy of the processing object 4 may be decreased. The processing system 1 including the fixing device 2 described above can process the processing object 4 without reversing or tilting the processing object 4 during processing by the multi-axis robot 3. Thus, the processing system 1 can process the processing object 4 accurately by the multi-axis robot 3.

In some embodiments, as shown in FIGs. 1 to 3, the fixing device 2 includes three fixing units 20. In this case, it is possible to suppress deflection of the processing object 4 fixed by the fixing device 2, as compared with a case in which the fixing device 2 includes two fixing units 20. Moreover, it is possible to prevent the structure from becoming complicated, as compared with a case in which the fixing device 2 includes four fixing units 20.
In some other embodiments, the fixing device 2 includes two fixing units 20 or not less than four fixing units 20.

In some embodiments, as shown in FIGs. 2 and 3, the at least one pressing device 25 includes the plurality of pressing devices 25. As shown in FIGs. 2 and 3, the plurality of pressing devices 25 are arranged at intervals, respectively, in the longitudinal direction of the second frame 23. In this case, since the plurality of pressing devices 25 are arranged at intervals in the longitudinal direction of the second frame 23, the fixing units 20 including the plurality of pressing devices 25 can press the processing object 4 against the first frame 22 by the pressing devices 25 at a plurality of positions in the longitudinal direction of the second frame 23, respectively. Thus, the processing objects 4 can be fixed by the plurality of pressing devices 25, even if the processing objects 4 have the various shapes.

In some embodiments, as shown in FIGs. 1 and 2, the above-described pressing device 25 includes a cylinder 25A that allows forward movement of a cylinder rod 252 by a pneumatic pressure or a hydraulic pressure. In the embodiments shown in FIGs. 1 and 2, the cylinder 25A includes a cylinder body portion 251, and the cylinder rod 252 that can be accommodated in the cylinder body portion 251 at least partially. The cylinder 25A is configured to allow forward movement, where the cylinder rod 252 protrudes from the cylinder body portion 251, and backward movement, where the cylinder rod 252 enters the cylinder body portion 251, by changing, with the pneumatic pressure or the hydraulic pressure, the length dimension of the portion of the cylinder rod 252 protruding from the cylinder body portion 251. Moreover, in the embodiments shown in FIGs. 1 and 2, the cylinder body portion 251 is arranged such that the longitudinal direction thereof extends along the X direction and is fixed, by bolt fastening or the like, to a surface 233 on an opposite side to the surface of the second frame 23 facing the first frame 22.

With the above configuration, since the pressing device 25 includes the cylinder 25A that allows the forward movement of the cylinder rod 252 by the pneumatic pressure or the hydraulic pressure, it is possible to simplify the structure of the fixing device 2 and to fix the processing object 4 by pressing the processing object 4 against the first frame 22 by the cylinder rod 252 of the cylinder 25A.

In some embodiments, as shown in FIG. 3, the second frame 23 includes a third frame 231 extending along the vertical direction, and a fourth frame 232 extending along the vertical direction and disposed at a position away from the third frame 231 along the Y direction. Then, the cylinder body portion 251 of the cylinder 25A is fixed to the third frame 231 and the fourth frame 232 by bolt fastening or the like, and the cylinder rod 252 is positioned between the third frame 231 and the fourth frame 232. In this case, since the cylinder rod 252 is positioned between the third frame 231 and the fourth frame 232, it is possible to suppress interference between the cylinder rod 252 and the multi-axis robot 3.

In some embodiments, as shown in FIGs. 1 and 3, the above-described fixing device 2 includes the above-described support table 26 which extends along the Y direction and is capable of fixing the plurality of fixing units 20. In this case, since the plurality of fixing units 20 are fixed by the support table 26, it is possible to prevent turnover of the plurality of fixing units 20.

In some embodiments, as shown in FIG. 1, the above-described support table 26 includes the above-described first support table 26A and the above-described second support table 26B. The above-described installation member 24 includes the above-described connection frame 24A connected to the first support table 26A and the second support table 26B. In this case, since the installation member 24 includes the connection frame 24A connected to the first support table 26A and the second support table 26B, the installation member 24 is firmly supported by the first support table 26A supporting the first frame 22 and the second support table 26B supporting the second frame 23. Thus, it is possible to prevent the processing object 4 inserted between the first frame 22 and the second frame 23 from falling off.

In some embodiments described above, the connection frame 24A extends between the first support table 26A and the second support table 26B. However, in some other embodiments, the connection frame 24A extends between the lower end of the first frame 22 and the lower end of the second frame 23, and is fixed to the first frame 22 and the second frame 23 by bolt fastening, welding, or the like. In other words, the connection frame 24A is connected to the lower end of the first frame 22 and the lower end of the second frame 23.

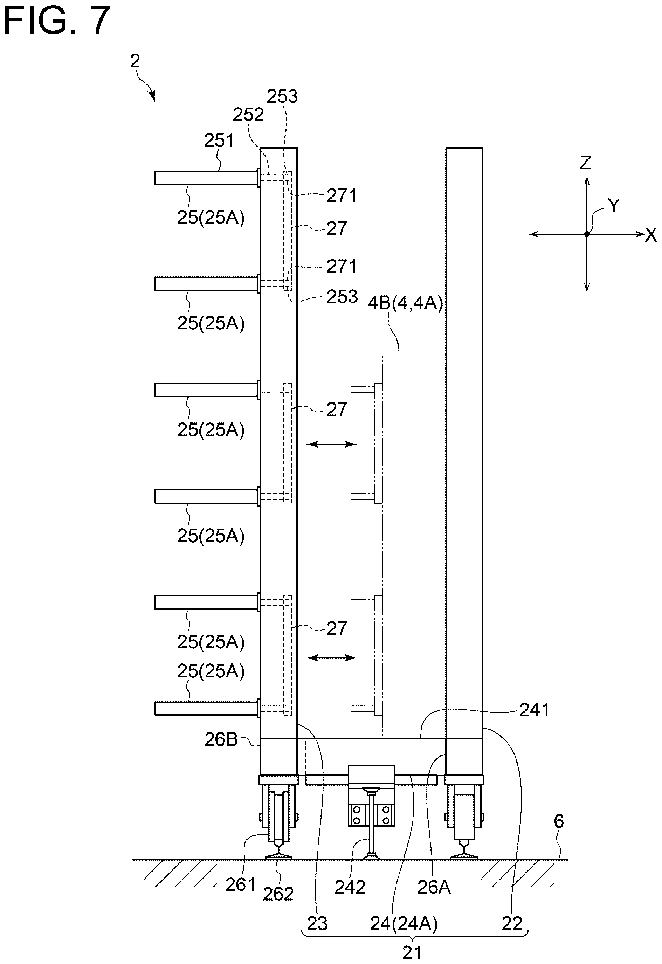

FIG. 7 is a schematic side view of the fixing units, for describing the fixing device for the multi-axis robot according to another embodiment. In some embodiments, the above-described fixing device 2 further includes long members 27 each having a longitudinal direction along the vertical direction, the long members 27 each being fixed to respective tips of the plurality of cylinder rods 252, as shown in FIG. 7. In the embodiment shown in FIG. 7, each of the long members 27 is formed into a flat plate shape and is fixed to the respective tips of the two cylinder rods 252 disposed in the vertical direction. In some other embodiments, each of the long members 27 is fixed to the respective tips of not less than three cylinder rods 252 disposed in the vertical direction. Moreover, in the embodiment shown in FIG. 7, each of the long members 27 is fixed to the respective tips of the cylinder rods 252 by screwing. More specifically, the long member 27 is fixed to the respective tips of the cylinder rods 252 by screwing male screw portions 253 formed at the tips of the cylinder rods 252 to female screw holes 271 formed in the long member 27, respectively.

With the above configuration, since the pressing device 25 includes the cylinder 25A that allows the forward movement of the cylinder rod 252 by the pneumatic pressure or the hydraulic pressure, it is possible to simplify the structure of the fixing device 2 and to fix the processing object 4 by pressing the processing object 4 against the first frame 22 by the cylinder rod 252 of the cylinder 25A. At this time since the fixing device 2 includes the long members 27 each being fixed to the respective tips of the plurality of cylinder rods 252, it is possible to fix the processing object 4 by pressing processing object 4 against the first frame 22, with the long member 27 biased by the plurality of cylinders 25A. Moreover, since each of the long members 27 has the longitudinal direction along the vertical direction, it is possible to fix the processing objects 4 of the various shapes by the long members 27.

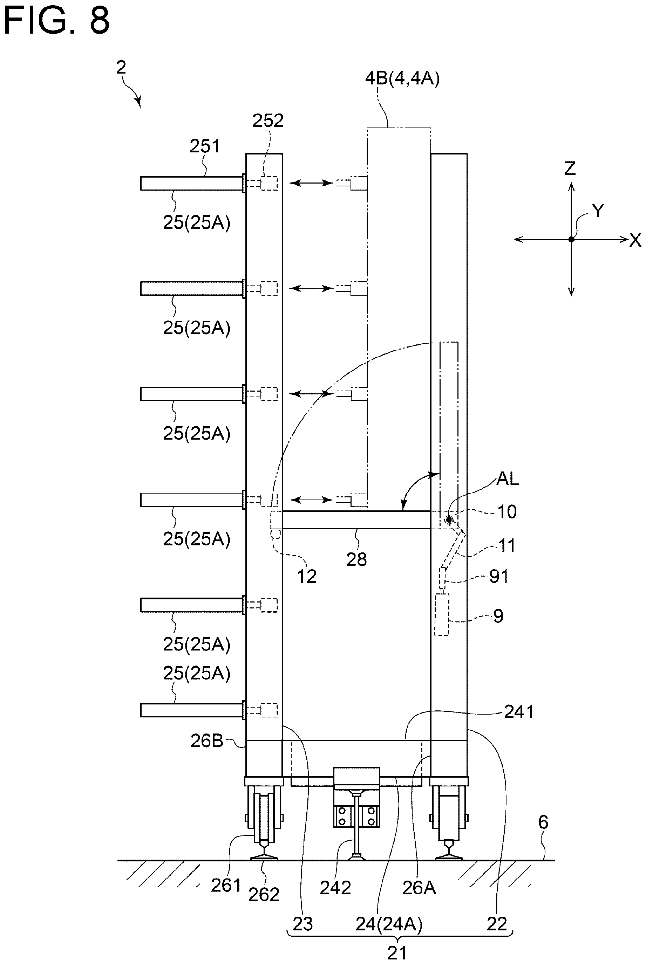

FIG. 8 is a schematic side view of the fixing units including a rotary table, for describing the fixing device for the multi-axis robot according to another embodiment. In some embodiments, as shown in FIG. 8, the above-described fixing units 20 include a rotary table 28 attached to at least one of the first frame 22 or the second frame 23. As shown in FIG. 8, the rotary table 28 is configured to be rotatable about an axial line AL extending along the horizontal direction (Y direction) orthogonal to the direction in which the first frame22 and the second frame 23 are separated from each other. Moreover, the rotary table 28 is configured to be able to mount the processing object 4.

In the embodiment shown in FIG. 8, the rotary table 28 is rotatably supported by the first frame 22 via a rotary portion 10 disposed at one end in the longitudinal direction. The rotary portion 10 is connected to a cylinder rod 91 of a cylinder 9 attached to the first frame 22 via a link mechanism portion 11, and rotates about the axial line AL of the rotary portion 10 in conjunction with forward/backward movement of the cylinder rod 91. Since the rotary table 28 rotates about the axial line AL of the rotary portion 10 as shown in FIG. 8, it is possible to obtain the first state where the longitudinal direction is along the Z direction and the second state where the longitudinal direction is along the X direction. In the second state, the rotary table 28 is positioned between the first frame 22 and the second frame 23 in a top view (not shown), and the other end of the rotary table 28 in the longitudinal direction is locked from the bottom by a locking member 12. Then, in the second state, the rotary table 28 can mount the processing object 4 thereon. As shown in FIG. 3, the locking member 12 extends between the third frame 231 and the fourth frame 232, and is fixed to the third frame 231 and the fourth frame 232 by bolt fastening, welding, or the like.

With the above configuration, it is also possible to mount the processing object 4 not on the connection frame 24A but on the rotary table 28, and to change the vertical height position of the mounted processing object 4. The rotary table 28 can dispose each of the processing objects 4 of the various shapes at a height position suitable for processing.

As described above, in some embodiments, as shown in FIG. 1, the processing system 1 includes the above-described fixing device 2, and the above-described at least one multi-axis robot 3 (multi-articulated robot) arranged at the position away from the fixing device 2 in the X direction. In this case, it is possible to fix the processing objects 4 of the various shapes by the fixing device 2, and to process, by the multi-axis robot 3, the processing objects 4 fixed by the fixing device 2.

In some embodiments, as shown in FIG. 1, the at least one multi-axis robot 3 (multi-articulated robot) includes at least one multi-axis robot 3A (multi-articulated robot) arranged on one side of the fixing device 2 in the X direction, and least one multi-axis robot 3B (multi-articulated robot) arranged on an opposite side to the multi-axis robot 3A across the fixing device 2 in the X direction. In this case, it is possible to process the processing object 4 fixed by the fixing device 2 simultaneously by the multi-axis robot 3A and the multi-axis robot 3B from both sides in the X direction.

In some embodiments, as shown in FIG. 1, the above-described processing system 1 further includes the multi-axis robot conveying device 7 capable of conveying the at least one multi-axis robot 3 (multi-articulated robot) along the Y direction. As shown in FIG. 1, the multi-axis robot conveying device 7 includes a robot conveying rail 71 and a robot conveying table 72. The robot conveying rail 71 extends along the Y direction and is arranged side by side with the fixing device 2. The robot conveying table 72 is arranged on the robot conveying rail 71 and is capable of reciprocating along the longitudinal direction of the robot conveying rail 71. Further, the robot conveying rail 71 is installed on the floor surface 6. The robot conveying table 72 is configured to be able to fix the multi-axis robot 3 on an upper surface 73 thereof. The multi-axis robot conveying device 7 further includes a drive unit including a linear servomotor (not shown). By driving the linear servomotor by the drive unit, the multi-axis robot conveying device 7 can cause the robot conveying table 72 to reciprocate along the longitudinal direction of the robot conveying rail 71.

With the above configuration, since the multi-axis robot conveying device 7 can convey the multi-axis robot 3 along the Y direction, it is possible to widen the range in which the processing object 4 can be processed by the multi-axis robot 3.

In some embodiments, as shown in FIG. 1, the multi-axis robot 3 further includes a controller 38 for controlling the constituent component (such as the servomotor) of the multi-axis robot 3 described above. Description of a general configuration and control of the controller 38 will be omitted.

In some embodiments, as shown in FIG. 1, the above-described processing system 1 further includes a tool magazine 39 for having the processing unit 50 attached thereto and detached therefrom. The tool magazine 39 is arranged within the movable range of the multi-axis robot 3. In this case, since the processing system 1 includes the tool magazine 39 for having the processing unit 50 attached thereto and detached therefrom, the multi-axis robot 3 can easily replace the processing unit 50, making it possible to process the processing object 4 by the various processing units 50.

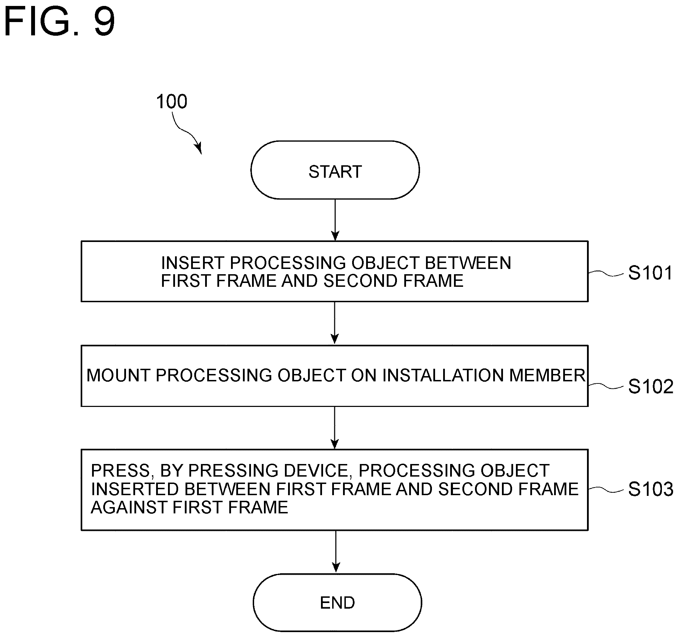

FIG. 9 is a flowchart of a fixing method of the processing object. The fixing method of the processing object is a method for fixing wood as the processing object during processing by the multi-axis robot. A fixing method 100 of the processing object according to some embodiments includes a step S101 of inserting the processing object 4 (wood 4A) between the first frame 22 and the second frame 23, a step S102 of mounting the processing object 4 on the installation member 24, and a step S103 of pressing the processing object 4 inserted between the first frame 22 and the second frame 23 against the first frame 22 by the pressing device 25 attached to the second frame 23, as shown in FIG. 9.

With the above method, it is possible to fix the processing object 4 (wood 4A) by pressing the processing object 4 against the first frame 22 by the pressing device 25 attached to the second frame 23, after inserting the processing object 4 between the first frame 22 and the second frame 23 to be placed on the installation member 24. Moreover, since the first frame 22 and the second frame 23 each have the longitudinal direction along the vertical direction (Z direction), it is possible to insert and fix, between the first frame 22 and the second frame 23, the processing objects 4 of the various shapes, for example, the plate-like member 4B such as the flat plate, the long member 4C such as the column or the beam, and the curved member 4D. Furthermore, with the above method, it is possible to fix the plate-like member 4B such as the flat plate and the curved member 4D in the vertical position, for example. Thus, it is possible to prevent the gap between the first frame 22 and the second frame 23 from increasing, and to decrease an exclusive space for the first frame 22 and the second frame 23.

### Reference Signs List

| | | | |
|---|---|---|---|
| 1 | Processing system | 25A | Cylinder |
| 2 | Fixing device | 26 | Support table |
| 3, 3A, 3B | Multi-axis robot | 27 | Long member |
| 4 | Processing object | 28 | Rotary plate |
| 4A | Wood | 30 | Arm |
| 4B | Plate-like member | 31-35 | Articulated portion |
| 4C | Long member | 36 | Wrist |
| 4D | Curved member | 37 | Robot base |
| 5 | Processing tool | 38 | Controller |
| 6 | Floor surface | 39 | Tool magazine |
| 7 | Multi-axis robot conveying device | 50, 50A-50D | Processing unit |
| 9 | Cylinder | 51 | Drive unit |
| 10 | Rotary portion | 52, 52A-52D | Holder |
| 11 | Link mechanism portion | 53 | Rotary blade |
| 12 | Locking member | 54 | Square chisel |
| 20 | Fixing unit | 55 | Drill |
| 21 | Support member | 56 | Square chisel blade |
| 22 | First frame | 57 | Router |
| 23 | Second frame | 58 | Vibration chisel |
| 24 | Installation member | 71 | Robot conveying rail |
| 24A | Connection frame | 72 | Robot conveying table |
| 25 | Pressing device | 73 | Upper surface |
| | | 100 | Fixing method of processing object |
| | | 301-306 | Rotational axis |

## Claims

1. A fixing device (2) for a multi-axis robot (3) for fixing wood as a processing object (4) during processing by the multi-axis robot (3), the device comprising a plurality of fixing units (20),
each of the plurality of fixing units (20) including:
a support member (21) including a first frame (22) having a longitudinal direction along a vertical direction, a second frame (23) having a longitudinal direction along the vertical direction and positioned away from the first frame (22) in a horizontal direction, and an installation member (24) positioned between the first frame (22) and the second frame (23) in a top view and configured to be able to mount the processing object (4); and
a plurality of pressing devices (25) attached to the second frame (23), the plurality of pressing devices (25) being capable of pressing the processing object (4) inserted between the first frame (22) and the second frame (23) against the first frame (22),
wherein the plurality of pressing devices (25) are arranged at intervals in the longitudinal direction of the second frame (23),
wherein the plurality of pressing devices (25) includes a cylinder (25A) that allows forward movement of a cylinder rod (252) by a pneumatic pressure or a hydraulic pressure,
**characterised in that**,
the fixing device (2) further includes a long member (27) having a longitudinal direction along the vertical direction, the long member (27) being fixed to respective tips of a plurality of cylinder rods (252).

2. The fixing device (2) for the multi-axis robot (3) according to claim 1, wherein the plurality of fixing units (20) further include a rotary table (28) attached to at least one of the first frame (22) or the second frame (23), the rotary table (28) being configured to be able to mount the processing object (4) and to be rotatable about an axial line (AL) extending along the horizontal direction orthogonal to a direction in which the first frame (22) and the second frame (23) are separated from each other.

3. The fixing device (2) for the multi-axis robot (3) according to claim 1 or 2, further comprising a support table (26) extending along the horizontal direction orthogonal to a direction in which the first frame (22) and the second frame (23) are separated from each other, the support table (26) being capable of fixing the plurality of fixing units (20).

4. The fixing device (2) for the multi-axis robot (3) according to claim 3, wherein the support table (26) includes a first support table (26) for supporting the first frame (22) and a second support table (26) for supporting the second frame (23), and
wherein the installation member (24) includes a connection frame (24A) connected to the first support table (26) and the second support table (26).

5. A processing system (1) comprising: the fixing device (2) for the multi-axis robot (3) according to any one of claims 1 to 4; and
at least one multi-axis robot (3) arranged at a position away from the fixing device (2) for the multi-axis robot (3), in a direction in which the first frame (22) and the second frame (23) are separated from each other.

## Patentansprüche

1. Befestigungsvorrichtung (2) für einen mehrachsigen Roboter (3) zum Befestigen von Holz als Bearbeitungsobjekt (4) während des Bearbeitens durch den mehrachsigen Roboter (3), wobei die Vorrichtung mehrere Befestigungseinheiten (20) umfasst,
wobei jede der mehreren Befestigungseinheiten (20) Folgendes enthält:
ein Tragelement (21), das einen ersten Rahmen (22), der eine Längsrichtung entlang einer vertikalen Richtung aufweist, einen zweiten Rahmen (23), der eine Längsrichtung entlang der vertikalen Richtung aufweist und in einer horizontalen Richtung von dem ersten Rahmen entfernt positioniert ist, und ein Installationselement (24) enthält, das in einer Draufsicht zwischen dem ersten Rahmen (22) und dem zweiten Rahmen (23) positioniert ist und konfiguriert ist, das Bearbeitungsobjekt (4) montieren zu können; und
mehrere Pressvorrichtungen (25), die an dem zweiten Rahmen (23) angebracht sind, wobei die mehreren Pressvorrichtungen (25) das Bearbeitungsobjekt (24), das zwischen dem ersten Rahmen (22) und dem zweiten Rahmen (23) eingesetzt ist, gegen den ersten Rahmen (22) pressen können,
wobei die mehreren Pressvorrichtungen (25) in Intervallen in der Längsrichtung des zweiten Rahmens (23) angeordnet sind,
wobei die mehreren Pressvorrichtungen (25) einen Zylinder (25A) enthalten, der eine Vorwärtsbewegung einer Zylinderstange (252) durch einen pneumatischen Druck oder einen hydraulischen Druck erlaubt,
**dadurch gekennzeichnet, dass**
die Befestigungsvorrichtung (2) ferner eine langes Element (27) enthält, das eine Längsrichtung entlang der vertikalen Richtung aufweist, wobei das lange Element (27) an entsprechenden Spitzen mehrerer Zylinderstangen (252) befestigt ist.

2. Befestigungsvorrichtung (2) für den mehrachsigen Roboter (3) nach Anspruch 1, wobei die mehreren Befestigungseinheiten (20) ferner einen Drehtisch (28) enthalten, der an dem ersten Rahmen (22) und/oder dem zweiten Rahmen (23) angebracht ist, wobei der Drehtisch (28) konfiguriert ist, das Bearbeitungsobjekt (4) montieren zu können und um eine axiale Linie (AL) drehbar zu sein, die sich entlang der horizontalen Richtung orthogonal zu einer Richtung, in der der erste Rahmen (22) und der zweite Rahmen (23) voneinander getrennt sind, erstreckt.

3. Befestigungsvorrichtung (2) für den mehrachsigen Roboter (3) nach Anspruch 1 oder 2, die ferner einen Tragtisch (26) umfasst, der sich entlang der horizontalen Richtung orthogonal zu einer Richtung, in der der erste Rahmen (22) und der zweite Rahmen (23) voneinander getrennt sind, erstreckt, wobei der Tragtisch (26) die mehreren Befestigungseinheiten (20) befestigen kann.

4. Befestigungsvorrichtung (2) für den mehrachsigen Roboter (3) nach Anspruch 3, wobei der Tragtisch (26) einen ersten Tragtisch (26) zum Tragen des ersten Rahmens (22) und einen zweiten Tragtisch (26) zum Tragen des zweiten Rahmens (23) enthält, und
wobei das Installationselement (24) einen Verbindungsrahmen (24A) enthält, der mit dem ersten Tragtisch (26) und dem zweiten Tragtisch (26) verbunden ist.

5. Bearbeitungssystem (1), das Folgendes umfasst: die Befestigungsvorrichtung (2) für den mehrachsigen Roboter (3) nach einem der Ansprüche 1 bis 4; und
mindestens einen mehrachsigen Roboter (3), der in einer Richtung, in der der erste Rahmen (22) und der zweite Rahmen (23) voneinander getrennt sind, in einer von der Befestigungsvorrichtung (2) für den mehrachsigen Roboter (3) entfernten Position angeordnet ist.

## Revendications

1. Dispositif de fixation (2) pour un robot multiaxial (3) destiné à fixer du bois comme un objet à transformer (4) pendant une transformation par le robot multiaxial (3), le dispositif comportant une pluralité d'unités de fixation (20),
chaque unité de la pluralité d'unités de fixation (20) incluant :
un élément de support (21) incluant un premier bâti (22) ayant une direction longitudinale le long d'une direction verticale, un second bâti (23) ayant une direction longitudinale le long de la direction verticale et positionné éloigné du premier bâti (22) dans une direction horizontale, et un élément d'installation (24) positionné entre le premier bâti (22) et le second bâti (23) dans une vue de dessus et configuré pour pouvoir monter l'objet à transformer (4) ; et
une pluralité de dispositifs de pression (25) associés au second bâti (23), la pluralité de dispositifs de pression (25) étant capable de presser l'objet à transformer (4) inséré entre le premier bâti (22) et le second bâti (23) contre le premier bâti (22),
dans lequel les dispositifs de la pluralité de dispositifs de pression (25) sont agencés à des intervalles dans la direction longitudinale du second bâti (23),
dans lequel la pluralité de dispositifs de pression (25) inclut un vérin (25A) qui permet un mouvement vers l'avant d'une tige de vérin (252) par une pression pneumatique ou une pression hydraulique,
**caractérisé en ce que**,
le dispositif de fixation (2) inclut en outre un élément long (27) ayant une direction longitudinale le long de la direction verticale, l'élément long (27) étant fixé à des embouts respectifs d'une pluralité de tiges de vérin (252).

2. Dispositif de fixation (2) pour le robot multiaxial (3) selon la revendication 1, dans lequel les unités de la pluralité d'unités de fixation (20) incluent en outre une table rotative (28) associée à au moins un bâti parmi le premier bâti (22) ou le second bâti (23), la table rotative (28) étant configurée pour pouvoir monter l'objet à transformer (4) et pour pouvoir tourner autour d'une ligne axiale (AL) s'étendant le long de la direction horizontale orthogonale à une direction dans laquelle le premier bâti (22) et le second bâti (23) sont séparés l'un de l'autre.

3. Dispositif de fixation (2) pour le robot multiaxial (3) selon la revendication 1 ou 2, comportant en outre une table de support (26) s'étendant le long de la direction horizontale orthogonale à une direction dans laquelle le premier bâti (22) et le second bâti (23) sont séparés l'un de l'autre, la table de support (26) étant capable de fixer la pluralité d'unités de fixation (20).

4. Dispositif de fixation (2) pour le robot multiaxial (3) selon la revendication 3, dans lequel la table de support (26) inclut une première table de support (26) pour supporter le premier bâti (22) et une seconde table de support (26) pour supporter le second bâti (23), et
dans lequel l'élément d'installation (24) inclut un bâti de liaison (24A) relié à la première table de support (26) et à la seconde table de support (26).

5. Système de transformation (1) comportant :
le dispositif de fixation (2) pour le robot multiaxial (3) selon l'une quelconque des revendications 1 à 4 ; et
au moins un robot multiaxial (3) agencé à une position éloignée du dispositif de fixation (2) pour le robot multiaxial (3), dans une direction dans laquelle le premier châssis (22) et le second châssis (23) sont séparés l'un de l'autre.
